# EUROPEAN PATENT APPLICATION

(11) **EP 3 150 477 A1**
(43) Date of publication of application: **05.04.2017**
(21) Application number: 16180957.9
(22) Date of filing: 25.07.2016
(51) Int. Cl.: B62K 25/08, B62K 25/00, B62L 1/00

(54) **STRADDLED VEHICLE**

(30) Priority: 01.09.2015 JP 2015172077
(71) Applicant: Yamaha Hatsudoki Kabushiki Kaisha, Shizuoka-ken 438-8501 (JP)
(72) Inventor: IGARASHI, Takeshi, Shizuoka-ken, 438-8501 (JP)
(74) Representative: Moreland, David

(57) **Abstract**

A straddled vehicle (1) has a battery (6); a front wheel (2) provided with an axle (50); a motor (40) having a stator (41) and a rotor (42) rotatable around the axle together with the front wheel (2), the motor (40) being supplied with electric power from the battery (6) to generate motive power; and a front suspension (30) supporting, in a cantilever manner, the axle (50) inserted through the front wheel (2) and the motor (40).

## Description

### FIELD OF INVENTION

The present invention relates to a straddled vehicle. The present invention particularly, though not exclusively, relates to a straddled vehicle having a motor, such as an electric motor, for driving a front wheel.

### BACKGROUND TO INVENTION

Recently, it has been proposed to use a motor as a driving source of a motorcycle. Generally in a motorcycle, a rear wheel is driven by an engine (internal combustion engine). Use of a motor instead of an engine realizes electric drive of a rear wheel. Use of a motor driving a front wheel (hereinafter, referred to as a "front motor") in addition to an engine or a motor driving the rear wheel realizes dual drive (all-wheel drive).

Japanese Laid-Open Patent Publication No. 2010-228570 (HONDA) discloses a motorcycle including an engine driving a rear wheel and a motor driving a front wheel (front motor). In the motorcycle disclosed in Japanese Laid-Open Patent Publication No. 2010-228570, the front motor is located in a wheel hub of the front wheel.

In the motorcycle, work of attaching or detaching a wheel is preferably as simple as possible in view of activities such as replacing tires or the like. In the case where the front motor is located in the vicinity of the front wheel as in the motorcycle disclosed in Japanese Laid-Open Patent Publication No. 2010-228570, the ease of attaching or detaching the front wheel is decreased as described below.

In the motorcycle disclosed in Japanese Laid-Open Patent Publication No. 2010-228570, the front wheel and the motor are tightened together and thus secured between left and right front forks by an axle and an axle nut. Therefore, the front wheel may be detached by detaching the axle nut securing the axle. In Japanese Laid-Open Patent Publication No. 2010-228570, the front motor is located in the wheel hub of the front wheel. Therefore, in order to allow only the front wheel to be detached, a space is needed in which the front wheel is movable without disturbing the front motor. However, the left and right front forks are located on both of the sides of the front wheel. As a result, the above-described space is not provided, which makes it difficult to detach only the front wheel. In Japanese Laid-Open Patent Publication No. 2010-228570, the front motor needs to be detached together with the front wheel. In this case, a harness such as an electric power cable or the like needs to be pulled out and cut, which complicates the work of detaching the front wheel.

The present invention seeks to address the above-described problem and has an object of providing a straddled vehicle having a front motor that improves the ease of attaching and/or detaching the front wheel.

It is an object of at least one embodiment of at least one aspect of the present invention to obviate or at least mitigate one or more problems or disadvantages in the prior art.

### SUMMARY OF INVENTION

Various aspects of the present invention are defined in the independent claims appended hereto. Some optional and/or preferred features are defined in the dependent claims appended hereto.

According to a first aspect of the present invention there is provided a straddled vehicle. The straddled vehicle may comprise a battery. The straddled vehicle may comprise a front wheel. The front wheel may be provided with an axle. The straddled vehicle may comprise a motor, such as an electric motor. The motor may have or include a stator and a rotor which may be rotatable around the axle together with the front wheel. The motor may be supplied with electric power from the battery to generate motive power. The straddled vehicle may comprise a front suspension. The front suspension may support, e.g. in a cantilever manner, the axle inserted through the front wheel and the motor.

Advantageously, as seen in a front view of the vehicle, the axle may have or include a first portion located in a first direction parallel to the axle with respect to a vehicle center line. The axle may have or include a second portion located in a second direction opposite to the first direction with respect to the vehicle center line. The first portion of the axle may be supported by the front suspension and/or the second portion of the axle may not be supported by the front suspension.

In an embodiment, as seen in a front view of the vehicle, the motor is supported by the front suspension on the side, with respect to the vehicle center line, on which the axle is supported by the front suspension.

The motor may be located between the front wheel and the front suspension.

A plurality of elements may be located in the vicinity of the axle and may be tightened together by a tightening member.

The motor may be secured to the front suspension and may not be attached to the front wheel.

The straddled vehicle may further have or include a link mechanism which may act as a detent for the front suspension.

The straddled vehicle may further have or include a steering device. The front suspension may have or include a suspension top portion attached to the steering device and/or a suspension bottom portion attached so as to be movable in a stroke direction with respect to the suspension top portion. The link mechanism may be attached as bridging the suspension top portion and the suspension bottom portion.

The straddled vehicle may further have or include a brake caliper supported by the axle.

The straddled vehicle may further have or include a bracket located between the brake caliper and the axle. The brake caliper may be supported by the axle via the bracket. The bracket may have or include a detent mechanism for the axle.

The brake caliper may be located on a/the same side as the front wheel with respect to the front suspension.

As seen in a front view of the vehicle, the brake caliper may be located outer to the front wheel in a vehicle width direction.

As seen in a front view of the vehicle, the front suspension may be located on one side with respect to the vehicle center line. The brake caliper may be located on the other side with respect to the vehicle center line.

The straddled vehicle may further have or include a brake disc attached to the front wheel.

The straddled vehicle may further have or include a pair of bearings supporting the axle such that the axle is rotatable. As seen in a front view of the vehicle, one of the pair of bearings may be located on one side with respect to the vehicle center line, and/or the other bearing may be located on the other side with respect to the vehicle center line.

The straddled vehicle may further have or include a steering shaft. The straddled vehicle may have or include a correction mechanism which may provide the steering shaft with an urging force cancelling a moment around a steering axial line, the moment acting on the steering shaft.

The correction mechanism may be located on the opposite side to the motor with respect to the steering shaft.

According to a second aspect of the present invention there is provided a straddled vehicle. The straddled vehicle may comprise a steering shaft. The straddled vehicle may comprise a front wheel steerable by a rotation of the steering shaft. The straddled vehicle may comprise an axle inserted through the front wheel. The straddled vehicle may comprise a front suspension which may support the axle in a cantilever manner. The straddled vehicle may comprise a correction mechanism which may provide the steering shaft with an urging force canceling a moment around a steering axial line, the moment acting on the steering shaft.

The straddled vehicle may have or include the front suspension supporting, e.g. preferably in a cantilever manner, the axle inserted through the front wheel and the motor (namely, the front suspension of a cantilever type). Therefore, the ease or workability of attaching and/or detaching the front wheel is improved.

The axle may be inserted through the front wheel and may typically include a first portion located in a first direction parallel to the axle with respect to a vehicle center line and/or a second portion located in a second direction opposite to the first direction with respect to the vehicle center line, as seen in a front view of the vehicle. The first portion of the axle may be supported by the front suspension and/or the second portion of the axle may not be supported by the front suspension.

From the point of view of further improving the ease or workability of attaching or detaching the front wheel, it may be preferable that the motor is optionally supported by the front suspension on the side, with respect to the vehicle center line, on which the axle is supported by the front suspension, as seen in a front view of the vehicle. Namely, it is preferable that the motor is located between the front wheel and the front suspension.

A structure in which the plurality of elements located in the vicinity of the axle may be tightened together by a tightening member decreases the number of elements.

With a structure in which the motor may be secured to the front suspension and may not be attached to the front wheel, the motor may beneficially not need to be detached in order to detach the front wheel. Therefore, the ease or workability of attaching or detaching the front wheel may be further improved.

The straddled vehicle preferably may have or include a link mechanism acting as a detent for the front suspension. The link mechanism may prevent a part of the front suspension from rotating with respect to another part of the front suspension.

The front suspension typically may have or include a suspension top portion attached to the steering device and/or a suspension bottom portion attached so as to be movable in a stroke direction with respect to the suspension top portion. In this case, the link mechanism may be attached as bridging the suspension top portion and the suspension bottom portion.

The straddled vehicle may further have or include a brake caliper supported by the axle.

The brake caliper may be supported by the axle via the bracket located between the brake caliper and the axle. With this structure, the brake caliper may have or include a detent structure for the axle. Thus, the rotation torque at the time of deceleration may be properly received.

The brake caliper may be typically located on the same side as the front wheel with respect to the front suspension.

From the point of view of the weight balance and the degree of freedom of layout of a driving mechanism such as the motor or the like, it may be preferable that the brake caliper may be located outer to the front wheel in the vehicle width direction as seen in a front view of the vehicle. In other words, it may be preferable that as seen in a front view of the vehicle, the front suspension may be located on one side with respect to the vehicle center line, whereas the brake caliper may be located on the other side with respect to the vehicle center line.

The straddled vehicle may further have or include a brake disc attached to the front wheel.

In the case where the straddled vehicle further has or includes a pair of bearings supporting the axle such that the axle is rotatable, it may be preferable that one of the pair of bearings may be located on one side with respect to the vehicle center line, whereas the other bearing may be located on the other wide with respect to the vehicle center line, as seen in a front view of the vehicle. This structure may allow the load of the tire to be retained in a divided manner, and therefore, the bearings may be allowed to be decreased in size and/or extended in life.

The straddled vehicle preferably may further have or include a correction mechanism providing the steering shaft with an urging force cancelling a moment around a steering axial line, the moment preferably acting on the steering shaft. The correction mechanism may suppress the decrease in the steerability caused by the generation of a steering force not intended by the rider.

In the case where the urging force provided by the correction mechanism is a pulling force, the correction mechanism may be located on the opposite side to the motor with respect to the steering shaft. In the case where the urging force provided by the correction mechanism is a pushing force, the correction mechanism may be located on the same side as the motor with respect to the steering shaft.

According to a third aspect of the present invention there is provided a straddled vehicle. The straddled vehicle may have or include a front suspension supporting, e.g. in a cantilever manner, an/the axle inserted through the front wheel. Therefore, the ease or workability of attaching and/or detaching the front wheel may be improved.

According to a further aspect of the present invention there is provided a straddled vehicle. The straddled vehicle may have or include a correction mechanism which may provide the steering shaft with an urging force cancelling a moment around a steering axial line. The moment may act on the steering shaft. Therefore, the decrease in the steerability caused by the generation of a steering force not intended by the rider may be suppressed.

According to a further aspect of the present invention there is provided a straddled vehicle having or including a front motor that improves the workability of attaching and/or detaching the front wheel is provided.

It will be appreciated that features analogous to those described in relation to any of the above aspects or optional features may be individually and separably or in combination applicable to any of the other aspects or optional features.

### BRIEF DESCRIPTION OF DRAWINGS

Embodiments of the present invention will now be described, by way of example only, with reference to the accompanying drawings, which are:
- **FIG. 1**: a schematic left side view of a straddled vehicle (motorcycle 1) according to an embodiment of the present invention;
- **FIG. 2**: a schematic exploded isometric view of a front wheel 2 and the vicinity thereof of the motorcycle 1;
- **FIG. 3**: a schematic cross-sectional view of the front wheel 2 and the vicinity thereof;
- **FIG. 4**: a right side view of the front wheel 2 and the vicinity thereof;
- **FIG. 5**: a left side view of a restriction mechanism 61 of the motorcycle 1;
- **FIG. 6**: a front view of the restriction mechanism 61;
- **FIG. 7**: a bottom view of elements in the vicinity of a steering axial line sa of the motorcycle 1;
- **FIG. 8**: a schematic isometric view showing elements in the vicinity of the steering axial line sa;
- **FIG.9**: a schematic side view of the motorcycle 1 in an example in which the motorcycle 1 has a correction mechanism 90;
- **FIG. 10**: a schematic isometric view showing the motorcycle 1 in the example in which the motorcycle 1 has the correction mechanism 90;
- **FIG. 11**: a schematic cross-sectional view showing the correction mechanism 90; and.
- **FIG. 12**: a graph showing an example of a relationship of the steering angle (deg) with the unbalance moment Mt1 (Nm) and the correction moment Mt2 (Nm).

### DETAILED DESCRIPTION OF PREFERRED EMBODIMENTS

An embodiment of the present invention will now be described with reference to the accompanying drawings. It will be appreciated that the present invention is not limited to the disclosed embodiment.

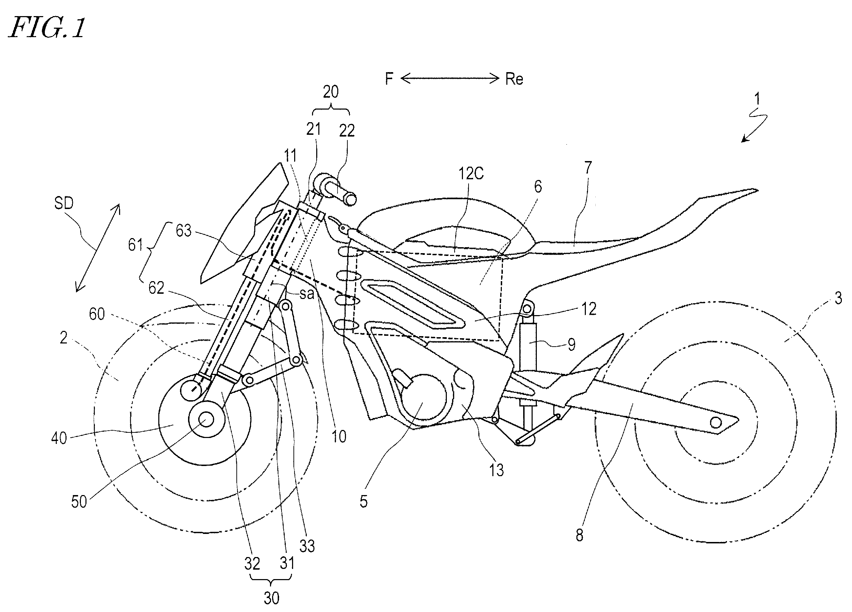

FIG. 1 shows a straddled vehicle according to an embodiment of the present invention. As shown in FIG. 1, the straddled vehicle is in this example, an on-road type motorcycle 1. It will, however, be appreciated that the motorcycle is not limited to an on-road type motorcycle. The motorcycle in other embodiments of the present invention may be of any other type, for example, a so-called off-road type, a moped type, a scooter type or the like. The term "straddled vehicle" is used herein to refer to a vehicle which a rider rides astride, and is not limited to a two-wheeled vehicle. The straddled motorcycle in embodiments according to the present invention may be, for example, a leaning multi-wheel (LMW), which changes the advancing direction by having the vehicle body inclined, or may be any other type of straddled vehicle such as an ATV (All Terrain Vehicle) or the like.

In this specification, the terms "front", "rear", "left" and "right" respectively mean front, rear, left and right as seen from a rider of the motorcycle 1. In the figures, F, Re, L and R respectively represent front, rear, left and right.

As shown in FIG. 1, the motorcycle 1 comprises a vehicle body frame 10, a steering device 20, a front suspension 30, a front wheel 2 and a rear wheel 3. The motorcycle 1 also comprises a motor 40 generating motive power usable to drive the front wheel 2 (hereinafter, such a motor will be referred to as a "front motor 40"), a motor 5 generating motive power usable to drive the rear wheel 3 (hereinafter, such a motor will be referred to as a "rear motor 5"), and a battery 6 supplying electric power to the front motor 40 and the rear motor 5.

The vehicle frame 10 comprises a head pipe 11 located at a frontmost position of the vehicle frame 10, a battery case 12 and a motor case 13. The battery case 12 and the motor case 13 are located to the rear of the head pipe 11. The vehicle frame 10 supports a seat 7 on which a driver is to sit.

The battery case 12 provided in the vehicle frame 10 accommodates the battery 6. More specifically, the battery 6 is attached to the vehicle frame 10. The battery case 12 is box-shaped and has an opening at a top surface thereof. The top surface of the battery case 12 is covered with a case cover 12C.

The battery 6 is, for example, a lithium-ion battery. The battery 6 may be detachable from the vehicle frame 10. The battery 6 is not limited to being provided in the number of one, and a plurality of (i.e. two or more) batteries 6 may be accommodated in the battery case 12. The battery 6 supplies electric power to both of a cable of a low voltage system and a cable of a high voltage system. The cable of the low voltage system supplies electric power to assisting elements such as a lamp, an ECU and the like, and in general, supplies a voltage of about 12 V. The cable of the high voltage system supplies electric power to the front motor 40 and the rear motor 5 (namely, supplies electric power usable to generate driving power), and supplies a voltage higher than the voltage to be supplied by the cable of the low voltage system. The cable of the high voltage system is of a different system from the cable of the low voltage system.

The battery 6 does not need to be directly attached to the vehicle frame 10. In this specification, the expression that "the battery 6 is attached to the vehicle frame 10" encompasses a case where the battery 6 is directly attached to the vehicle frame 10 and a case where the battery 6 is attached to the vehicle frame 10 indirectly (namely, while having a component other than the vehicle frame 10 between the battery 6 and the vehicle frame 10).

The motor case 13 accommodates a rear wheel driving system including the rear motor 5. The rear wheel 3 to be driven by the rear motor 5 is attached to a rear arm 8. Motive power generated by the rear motor 5 is transmitted to the rear wheel 3 via a belt or a chain (not shown). A rear suspension 9 is located to the rear of the battery case 12 and the motor case 13. A top end of the rear suspension 9 is attached to a rear wall of the battery case 12. A bottom end of the rear suspension 9 is supported by the motor case 13 via, for example, a link mechanism.

The steering device 20 provides a steering shaft 21 inserted through the head pipe 11 and a handle 22 attached to a top end of the steering shaft 21. The steering device 20 is pivotable around a steering axial line sa (central axis of the steering shaft 21) with respect to the vehicle frame 10. The pivoting of the steering device 20 (rotation of the steering shaft 21) steers the front wheel 2.

The front suspension 30 is coupled with the steering device 20. The front suspension 30 has a portion attached to the steering device 20 (hereinafter, such a portion will be referred to as a "suspension top portion 31") and a portion attached so as to be movable in a stroke direction SD with respect to the suspension top portion 31 (hereinafter, such a portion will be referred to as a "suspension bottom portion 32").

In the case where the front suspension 30 is of a telescopic type, one of the suspension top portion 31 and the suspension bottom portion 32 includes an outer tube, and the other of the suspension top portion 31 and the suspension bottom portion 32 includes an inner tube. In the motorcycle 1 shown in FIG. 1, the front suspension 30 is of an upside-down type. The suspension top portion 31 has an outer tube, and the suspension bottom portion 32 has an inner tube. By contrast, in the case where the front suspension 30 is of a normal type, the suspension top portion 31 has an inner tube, and the suspension bottom portion 32 has an outer tube.

A link mechanism 33 is attached as bridging the suspension top portion 31 and the suspension bottom portion 32. The link mechanism 33 acts as a detent for the front suspension 30.

An axle 50 is inserted through the front wheel 2. The front wheel 2 is attached to the front suspension 30 so as to be rotatable around the axle 50.

The front motor 40 is located in the vicinity of the front wheel 2. The front motor 40 is supplied with electric power from the battery 6 to generate motive power. As the front motor 40, a DC brushless motor, for example, is preferably usable.

In this embodiment, the front suspension 30 is located only on one side in a vehicle width direction (in the example shown in FIG. 1, the left side of the vehicle). (Namely, there is only one front fork, which is located on the left side of the vehicle, and no front fork is located on the right side of the vehicle.) The front suspension 30 supports, in a cantilever manner, the axle 50 inserted through the front wheel 2 and the front motor 40.

The front motor 40 and the battery 6 are electrically connected with each other by an electric power cable 60. The electric power cable 60 is a cable of a high voltage system (high voltage cable). The electric power cable 60 as the high voltage cable has a diameter of, for example, 5 mm (20 sq) or greater.

The motorcycle 1 in this embodiment also has a restriction mechanism 61 restricting the electric power cable 60 to move in the stroke direction SD of the front suspension 30. The restriction mechanism 61 comprises a guide portion 62 and an accommodation portion 63 as described below in detail.

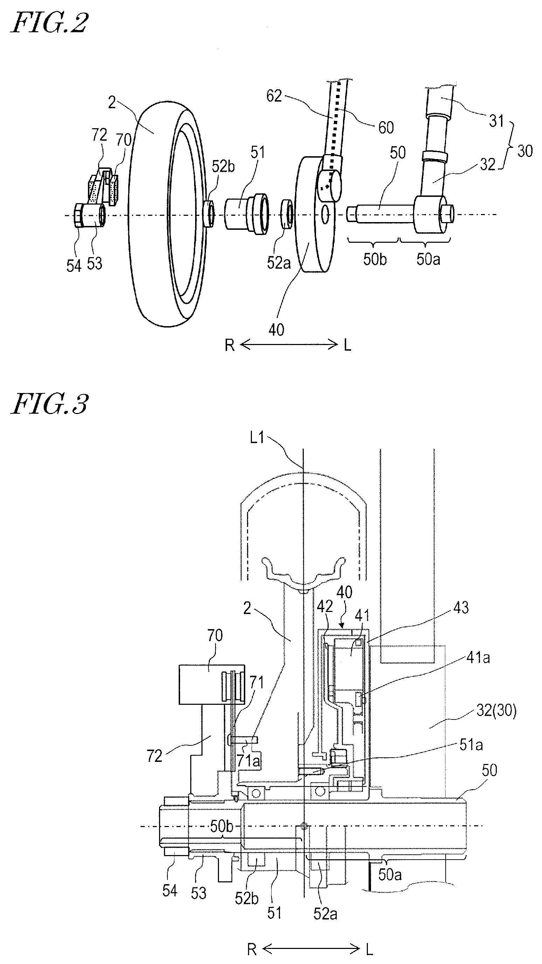

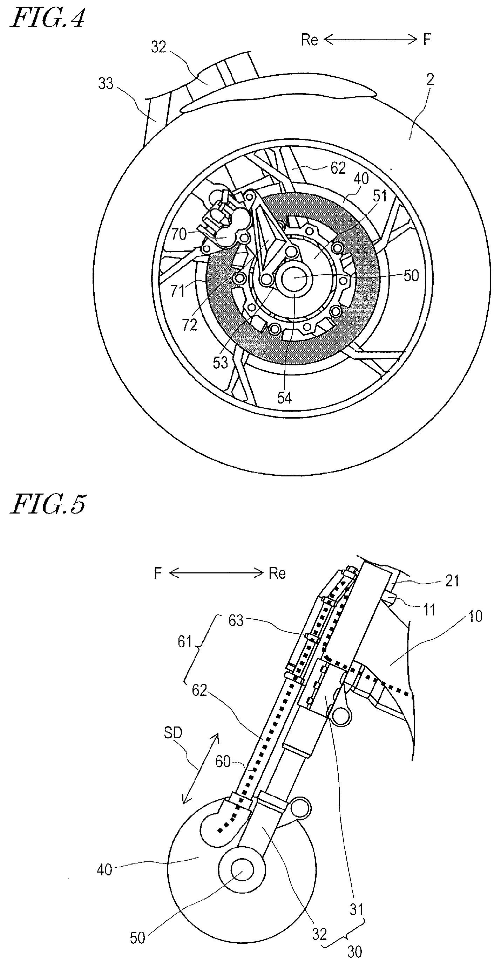

Hereinafter, a specific structure of the front suspension 30 of a cantilever type and the restriction mechanism 61 will be described. First, with reference to FIG. 2, FIG. 3 and FIG. 4, a specific structure of the front suspension 30 of the cantilever type will be described. FIG. 2 is an exploded isometric view of the front wheel 2 and the vicinity thereof, and FIG. 3 is a cross-sectional view of the front wheel 2 and the vicinity thereof. FIG. 4 is a right side view of the front wheel 2 and the vicinity thereof.

As described above, the front suspension 30 supports the axle 50 in a cantilever manner. As shown in FIG. 2 and FIG. 3, as seen in a front view of the vehicle, the axle 50 has a first portion 50a located in a first direction parallel to the axle 50 with respect to a vehicle center line L1 and a second portion 50b located in a second direction opposite to the first direction with respect to the vehicle center line L1 (see FIG. 3). (In this example, the first direction is a leftward direction L, and the second direction is a rightward direction R). The first portion 50a of the axle 50 is supported by the front suspension 30, whereas the second portion 50b of the axle 50 is not supported by the front suspension 30.

The axle 50 is inserted through a center hub 51 located at a center of the front wheel 2 and through the front motor 40. The center hub 51 is cylindrical and is secured to the front wheel 2 by a bolt 51 a. The axle 50 is rotatably supported in the center hub 51 by a pair of bearings (in this example, ball bearings) 52a and 52b. As seen in a front view of the vehicle, one of the pair of bearings 52a and 52b, specifically, the bearing 52a is located on one side (in this example, the left side of the vehicle) with respect to the vehicle center line L1, and the other bearing 52b is located on the other side (in this example, the right side of the vehicle) with respect to the vehicle center line L1. The center hub 51 does not need to be separate from the front wheel 2, and may be integrally formed with the front wheel 2.

The front motor 40 includes a stator 41, a rotor 42, and a housing 43 accommodating the stator 41 and the rotator 42. The stator 41 is secured to the housing 43 by a bolt 41 a. The rotor 42 is rotatable around the axle 50 together with the front wheel 2. The rotor 42 is coupled with the center hub 51 via a one-way clutch or a decelerator.

The front motor 40 is located between the front wheel 2 and the front suspension 30. Namely, as seen in a front view of the vehicle, the front motor 40 is supported by the front suspension 30 on the side, with respect to the vehicle center line L1, on which the axle 50 is supported by the front suspension 30 (namely, supported on the side of the first portion 50a).

The front motor 40 is secured to the front suspension 30 and is not attached to the front wheel 2. Specifically, the housing 43 of the front motor 40 and the suspension bottom portion 32 are secured to each other by a key structure, and this arrangement causes the front motor 40 to be secured to the front suspension 30. Needless to say, the structure of securing the front motor 40 to the front suspension 30 is not limited to the above-described structure, and the front motor 40 may be secured to the front suspension 30 by use of a bolt or any of various other structures.

As shown in FIG. 2, FIG. 3 and FIG. 4, the motorcycle 1 further provides a brake caliper 70 supported by the axle 50 and a brake disc 71 attached to the front wheel 2. The brake disc 71 is tightened to the front wheel 2 by a bolt 71 a.

The brake caliper 70 is supported by the axle 50 via a bracket 72 located between the brake caliper 70 and the axle 50. The bracket 72 is attached to a brake hub 53 located on the opposite side to the front motor 40 and the front suspension 30 with respect to the center hub 51. The brake hub 53 is cylindrical, and the axle 50 is inserted through the brake hub 53. The brake hub 53 is coupled with the axle 50 by serration engagement. Therefore, the bracket 72 attached to the brake hub 53 is considered to have a detent mechanism for the axle 50.

The brake caliper 70 is located on the same side as the front wheel 2 with respect to the front suspension 30. As seen in a front view of the vehicle, the brake caliper 70 is located outer to the front wheel 2 in the vehicle width direction. In other words, as seen in a front view of the vehicle, the front suspension 30 is located on one side with respect to the vehicle center line L1 (in this example, on the left side of the vehicle), whereas the brake caliper 70 is located on the other side (in this example, on the right side of the vehicle) with respect to the vehicle center line L1.

The plurality of elements located in the vicinity of the axle 50 (the front motor 40, the bearings 52a and 52b, etc.) are tightened together by a shaft end nut (tightening member) 54.

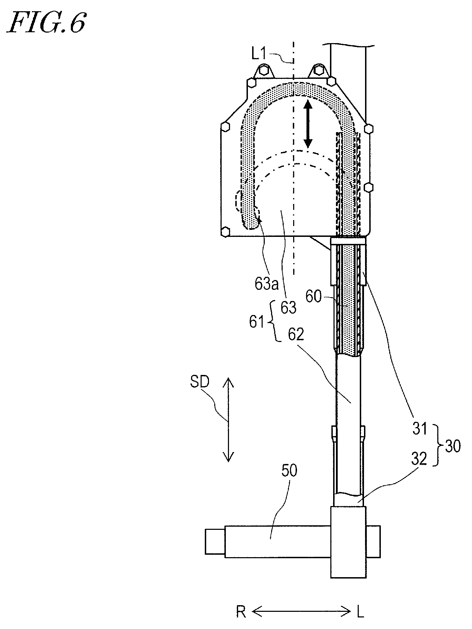

Now, with reference to FIG.5 and FIG.6, a specific structure of the restriction mechanism 61 will be described. FIG. 5 is a left side view of the restriction mechanism 61, and FIG. 6 is a front view of the restriction mechanism 61. In FIG. 5 and FIG. 6, a part of the elements of the motorcycle 1 may be omitted or cut out.

As shown in FIG. 5 and FIG. 6, the restriction mechanism 61 has the guide portion 62 and the accommodation portion 63.

The guide portion 62 is pipe-like, and extends parallel to the stroke direction SD. A part of the electric power cable 60 is inserted through the guide portion 62. The guide portion 62 is typically formed of a metal material such as an aluminum alloy or the like.

The guide portion 62 is secured to the suspension bottom portion 32 directly or indirectly. In this embodiment, a bottom end of the guide portion 62 is attached to the front motor 40, and the guide portion 62 is secured to the suspension bottom portion 32 via the front motor 40. The electric power cable 60 is secured to the guide portion 62 at an appropriate position in the guide portion 62 (at one position or a plurality of positions). Therefore, the guide portion 62 and the electric power cable 60 move integrally in the stroke direction SD in accordance with the movement of the suspension bottom portion 32 with respect to the suspension top portion 31.

The accommodation portion 63 is provided on the suspension top portion 31. In the accommodation portion 63, a part of the electric power cable 60 is accommodated in a sagging state. The accommodation portion 63 is box-like, and is typically formed of a metal material (e.g. aluminum alloy). A specific shape of the accommodation portion 63 is not limited to the shape shown in FIG. 6 and the like.

A part (top end) of the guide portion 62 is inserted into the accommodation portion 63 from a left bottom part of the accommodation portion 63, and slides in the accommodation portion 63 along with the stroke of the front suspension 30. The amount of stroke of the front suspension 30 is, for example, 100 mm to 150 mm. One end of the electric power cable 60 is connected with the front motor 40, and the electric power cable 60 extends from the front motor 40 toward the vehicle frame 10 via the guide portion 62, the accommodation portion 63 and an opening 63a at a right bottom part of the accommodation portion 63. As the guide portion 62 slides during the stroke of the front suspension 30, a part of the electric power cable 60 that is inside the accommodation portion 63 and is exposed from the guide portion 62 also moves in the stroke direction SD (see FIG. 6).

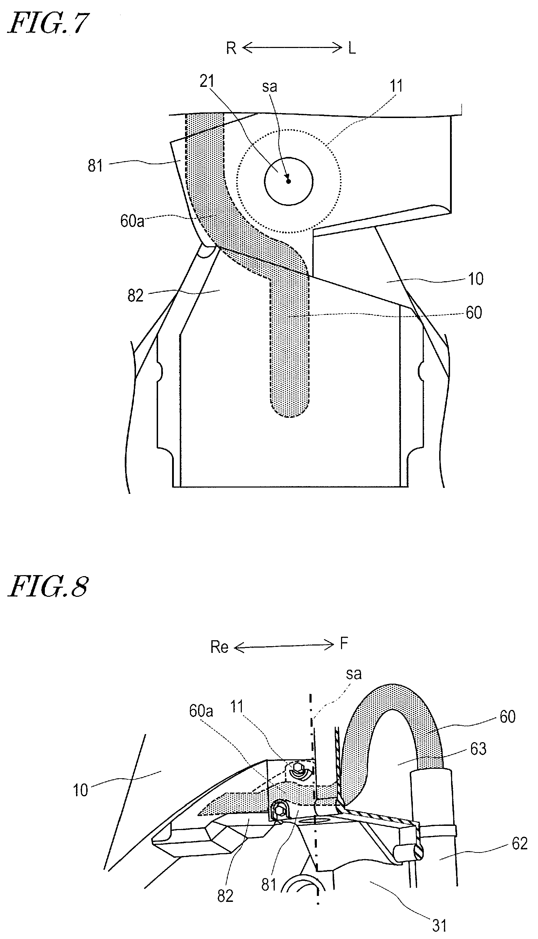

As shown in FIG. 6, as seen front of the vehicle, the electric power cable 60 is located as bridging over the vehicle center line L1. As shown in FIG. 1, the electric power cable 60 passes the vicinity of the steering axial line sa and connects the battery 6 and the front motor 40 with each other. FIG. 7 is a bottom view of elements in the vicinity of the steering axial line sa. FIG. 8 is an isometric view of elements in the vicinity of the steering axial line sa.

As shown in FIG. 7 and FIG. 8, the electric power cable 60 provides a portion 60a bypassing the head pipe 11 (hereinafter, such a portion will be referred to as a "bypass portion 60a"). Covers 81 and 82 are provided so as to cover the bypass portion 60a. The covers 81 and 82 are typically formed of a metal material (e.g. aluminum alloy). In this example, the bypass portion 60a is covered with the two covers 81 and 82. One of the covers 81 and 82, more specifically, the cover 81 is attached to the suspension top portion 31, whereas the other cover 82 is attached to the suspension bottom portion 32. The number and the shape(s) of the covers covering the bypass portion 60a are not limited to those shown herein. The electric power cable 60 may be located so as to be inserted through the head pipe 11 and the steering shaft 21.

As described above, the motorcycle 1 in this embodiment provides the front suspension 30 supporting, in a cantilever manner, the axle 50 inserted through the front wheel 2 and the front motor 40. Namely, the front suspension 30 is of a cantilever type. Therefore, the ease or workability of attaching or detaching the front wheel 2 is improved as compared with in the case where a general front suspension supporting the axle with two forks on both of the left side and the right side is used.

From the point of view of further improving the ease or workability of attaching or detaching the front wheel 2, it is preferable that as shown in FIG. 3 and the like, the front motor 40 is supported by the front suspension 30 on the side, with respect to the vehicle center line L1, on which the axle 50 is supported by the front suspension 30, as seen in a front view of the vehicle. Namely, it is preferable that the front motor 40 is located between the front wheel 2 and the front suspension 30.

In this embodiment, the plurality of elements located in the vicinity of the axle 50 are tightened together by the shaft end nut (tightening member) 54. Such a structure decreases the number of elements.

In this embodiment, the front motor 40 is secured to the front suspension 30 and is not attached to the front wheel 2. Such a structure does not require the front motor 40 to be detached in order to detach the front wheel 2. Therefore, the ease or workability of attaching or detaching the front wheel 2 is further improved.

As shown in FIG. 1 and the like, the motorcycle 1 preferably further provides the link mechanism 33 acting as a detent for the front suspension 30. The link mechanism 33 acts to prevent the suspension bottom portion 32 from rotating with respect to the suspension top portion 31.

In this embodiment, the bracket 72 provides a detent structure for the axle 50. Therefore, in the case where the brake caliper 70 is supported by the axle 50 via the bracket 72 (see, for example, FIG. 3), the rotation torque at the time of deceleration is properly received.

From the point of view of the weight balance and the degree of freedom of layout of a driving mechanism such as the front motor 40 or the like, it is preferable that the brake caliper 70 is located outer to the front wheel 2 in the vehicle width direction as seen in a front view of the vehicle. In other words, it is preferable that as seen in a front view of the vehicle, the front suspension 30 is located on one side with respect to the vehicle center line L1, whereas the brake caliper 70 is located on the other side with respect to the vehicle center line L1.

It is preferable that as seen in a front view of the vehicle, one of the pair of bearings 52a and 52b, more specifically, the bearing 52a is located on one side with respect to the vehicle center line L1, whereas the other bearing 52b is located on the other wide with respect to the vehicle center line L1. This structure allows the load of the tire to be retained in a divided manner, and therefore, the bearings 52a and 52b are allowed to be decreased in the size and extended in the life.

The motorcycle 1 in this embodiment provides the restriction mechanism 61 restricting the electric power cable 60 to move in the stroke direction SD of the front suspension 30. Therefore, the sag of the electric power cable 60 caused by the movement of the front motor 40 with respect to the battery 6 is absorbed by the movement of the electric power cable 60 in the stroke direction SD. This allows the electric power cable 60 to be located so as not to protrude from the front suspension 30.

The restriction on the movement of the electric power cable 60 by the restriction mechanism 61 is preferably realized by an arrangement in which the restriction mechanism 61 includes the pipe-like guide portion 62 extending parallel to the stroke direction SD as in this embodiment. A part of the electric power cable 60 is inserted through the guide portion 62, and as a result, the electric power cable 60 is restricted to move in the stroke direction SD in the guide portion 62.

The restriction mechanism 61 preferably provides the accommodation portion 63 provided on the suspension top portion 31 and accommodating a part of the electric power cable 60 in a sagging state as in this embodiment. The accommodation portion 63 as described above acts as an area where the sag of the electric power cable 60 is absorbed.

As shown in FIG. 7 and FIG. 8, the covers 81 and 82 are provided to cover the portion 60a, of electric power cable 60, bypassing the head pipe 11 (bypass portion 60a). The covers 81 and 82 prevent the electric power cable 60 from being damaged.

As shown in FIG. 6, as seen in a front view of the vehicle, the electric power line 60 is located as bridging over the vehicle center line L1. Such an arrangement further suppresses the electric power line 60 from protruding in the vehicle width direction.

Now, an example of more preferable modification of structure of the motorcycle 1 in this embodiment will be described. In the case where the driving mechanism such as the front motor 40 or the like is located in the vicinity of the front wheel 2 as in this embodiment, there may be a case where the weight of the steering system (more specifically, the weight of the steering device 20 and the elements hanging therefrom) may be different between the left side and the right side of the vehicle. In such a case, the steering force is generated on the heavier side. As a result, the steerability may be decreased; for example, the straightness of the advancing direction may be decreased, or the turning performance may be made different between the left turn and the right turn. This problem tends to be caused in the case where the front suspension 30 of the cantilever type is used as in this embodiment. The reason is as follows. In the case where the front suspension 30 of the cantilever type is used, the fork is located only on one side; and therefore, if the driving mechanism is located on the same side as the fork, the weight difference between the left side and the right side tends to be further increased.

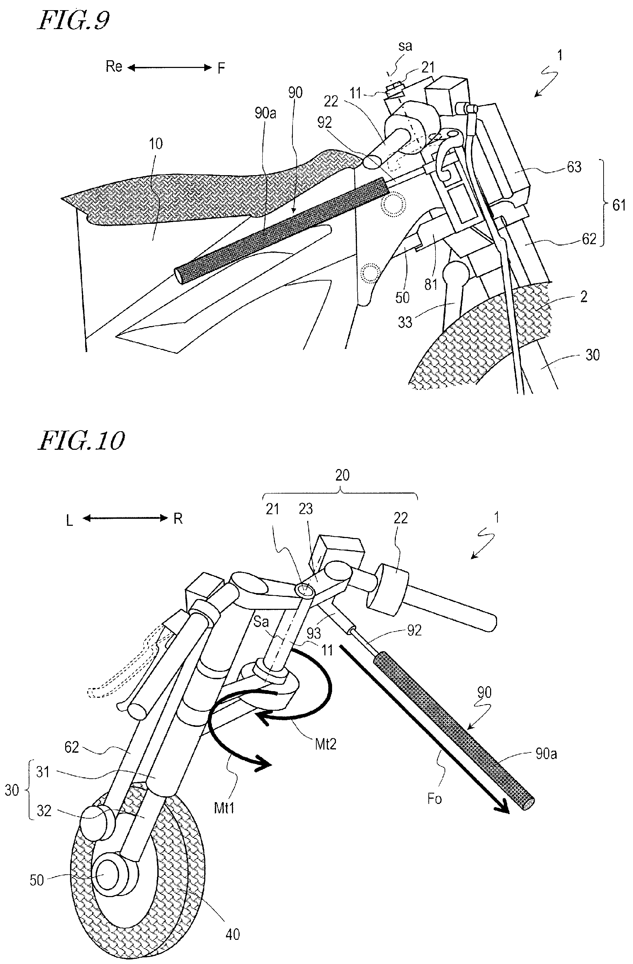

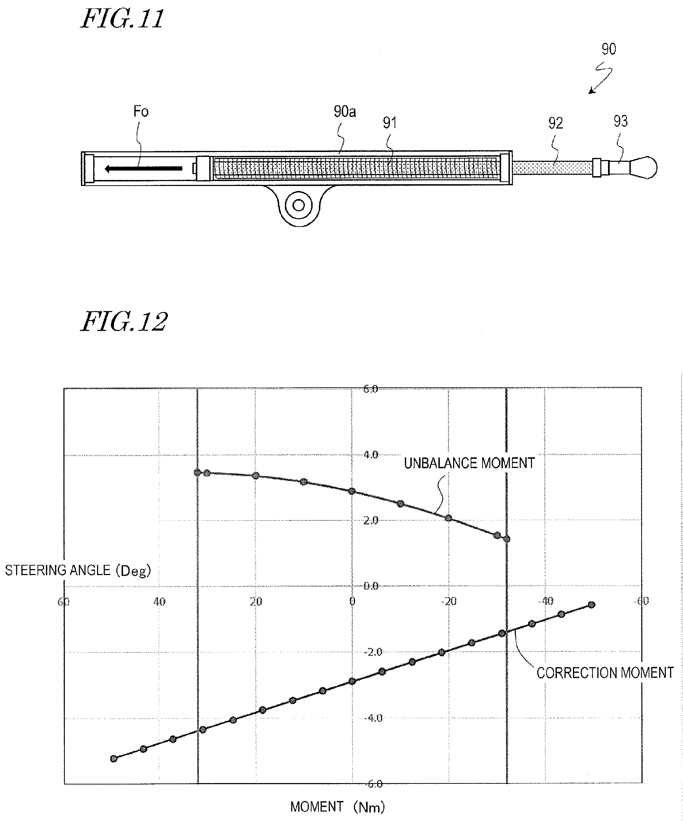

The above-described problem (decrease in the steerability) may be sought to be prevented by provision of a correction mechanism 90 as shown in FIG. 9, FIG. 10 and FIG. 11. FIG. 9 and FIG. 10 are respectively a side view and an isometric view schematically showing the motorcycle 1 in an example in which the motorcycle 1 includes the correction mechanism 90. FIG. 11 is a cross-sectional view schematically showing the correction mechanism 90.

As described above, when there is weight unbalance (weight difference between the left side and the right side), a moment Mt1 around the steering axial line sa (hereinafter, referred to as "unbalance moment Mt1") acts on the steering shaft 21. The unbalance moment Mt1 (in this example, counterclockwise moment) may generate a steering force not intended by the rider.

The correction mechanism 90 provides the steering shaft 21 with an urging force Fo cancelling the unbalance moment Mt1. Because of the urging force Fo, a moment opposite to the unbalance moment Mt1 (in this example, the moment opposite to the unbalance moment Mt1 is a clockwise moment Mt2, and hereinafter, will be referred to as a "correction moment Mt2") acts on the steering shaft 21. In this manner, the provision of the correction mechanism 90 suppresses the decrease in the steerability caused by the generation of the steering force not intended by the rider.

The correction mechanism 90 in this example is a spring damper comprising a compression spring 91 shown in FIG. 11. The spring damper 90 has a damper main body 90a of a cylindrical shape with a bottom, a damper rod 92 inserted into the damper main body 90a, and a coupling member 93 connected to a tip of the damper rod 92. The compression spring 91 is outserted around the damper rod 92. The damper main body 90a is secured to the vehicle frame 10. The coupling member 93 is coupled with the steering device 20 (more specifically, to a bracket 23 of the steering device 20).

As can be seen from FIG. 9 and FIG. 10, the spring damper 90 is located on the opposite side to the front motor 40 with respect to the steering shaft 21. In the spring damper 90, a pulling force (pulling load) is generated as the urging force Fo by the compression spring 91.

FIG. 12 shows an example of relationship of the steering angle (deg) with the unbalance moment Mt1 (Nm) and the correction moment Mt2 (Nm). As shown in FIG. 12, the urging force Fo of the spring damper 90 is set so as to generate the correction moment Mt2 cancelling the unbalance moment Mt1, and thus the steerability is suppressed from being decreased. From the point of view of sufficiently suppressing the decrease in the steerability, it is preferable that the difference between the absolute value of the unbalance moment Mt1 and the absolute value of the correction moment Mt2 is as small as possible in a desired steering angle range. However, the correction moment Mt2 does not need to totally cancel the unbalance moment Mt1. It is sufficient that the difference between the absolute value of the unbalance moment Mt1 and the absolute value of the correction moment Mt2 is within a predetermined range.

The spring damper 90 may comprise a spring other than the compression spring 91 instead of the compression spring 91 (for example, may comprise a torsion spring). The correction mechanism 90 does not need to be a spring damper. The correction mechanism 90 may be a hydraulic damper, an electric actuator or the like.

In the above-described example, the spring damper 90 generates a pulling force (pulling load) as the urging force Fo. The correction mechanism 90 may generate a pushing force (pushing load) as the urging force Fo. In the case of generating a pushing force, the correction mechanism 90 is located on the same side as the front motor 40 with respect to the steering shaft 21.

In the above-described example, the motorcycle 1 comprises the rear motor 5. The present invention is preferably (though not exclusively) applicable to a motorcycle 1 including an intemal combustion engine (engine) generating motive power usable to drive the rear wheel, instead of the rear motor 5.

The correction mechanism 90 described above with reference to FIG. 9 and the like may be used for a motorcycle (straddled vehicle) that does not include the front motor 40. Even in the motorcycle not including the front motor 40, weight unbalance may occur in the case where the front suspension 30 of the cantilever type is used. The provision of the correction mechanism 90 may suppress the decrease in the steerability caused by the generation of a steering force not intended by the rider.

In an embodiment according to the present invention, the straddled vehicle comprising the front motor improves the ease or workability of attaching or detaching the front wheel. The embodiment according to the present invention is preferably applicable to various types of straddled vehicles including a motorcycle.

While the present invention has been described with respect to preferred embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

It will be appreciated that the term straddled vehicle or motor vehicle used herein, and as used in the art, is meant to include at least the following terms also used in the art:
straddled vehicle, straddle-type vehicle or motor vehicle, saddle-straddling type vehicle or motor vehicle, and includes: motorcycles and motorbikes as well as motor tricycles, quad bikes and All Terrain Vehicles (ATVs), scooters, mopeds and snowmobiles.

## Claims

1. A straddled vehicle (1), comprising:
a battery (6);
a front wheel (2) provided with an axle (50);
a motor (40) comprising a stator (41) and a rotor (42)rotatable around the axle together with the front wheel, the motor being supplied with electric power from the battery to generate motive power; and
a front suspension (30) supporting, in a cantilever manner, the axle inserted through the front wheel and the motor.

2. The straddled vehicle according to claim 1, wherein:
as seen in a front view of the vehicle, the axle has a first portion (50a)located in a first direction parallel to the axle with respect to a vehicle center line (L1) and a second portion (50b) located in a second direction opposite to the first direction with respect to the vehicle center line; and
the first portion of the axle is supported by the front suspension and the second portion of the axle is not supported by the front suspension.

3. The straddled vehicle according to either of claims 1 or 2, wherein as seen in a front view of the vehicle, the motor is supported by the front suspension on the side, with respect to a/the vehicle center line (L1), on which the axle is supported by the front suspension.

4. The straddled vehicle according to any of claims 1 to 3, wherein the motor is located between the front wheel and the front suspension.

5. The straddled vehicle according to any of claims 1 to 4, wherein a plurality of elements located in the vicinity of the axle are tightened together by a tightening member (54).

6. The straddled vehicle according to any of claims 1 to 5, wherein the motor is secured to the front suspension and is not attached to the front wheel.

7. The straddled vehicle according to any of claims 1 to 6, further comprising a link mechanism acting as a detent for the front suspension.

8. The straddled vehicle according to claim 7, further comprising a steering device, wherein:
the front suspension has a suspension top portion (31) attached to the steering device and a suspension bottom portion (32) attached so as to be movable in a stroke direction with respect to the suspension top portion; and
the link mechanism is attached as bridging the suspension top portion and the suspension bottom portion.

9. The straddled vehicle according to any of claims 1 to 8, further comprising a brake caliper (70) supported by the axle.

10. The straddled vehicle according to claim 9, further comprising a bracket (72) located between the brake caliper and the axle, wherein:
the brake caliper is supported by the axle via the bracket; and
the bracket has a detent mechanism for the axle.

11. The straddled vehicle according to either of claims 9 or 10, wherein the brake caliper is located on the same side as the front wheel with respect to the front suspension, wherein optionally
as seen in a front view of the vehicle, the brake caliper is located outer to the front wheel in a vehicle width direction.

12. The straddled vehicle according to any of claims 9 to 11, wherein as seen in a front view of the vehicle, the front suspension is located on one side with respect to the vehicle center line, and the brake caliper is located on the other side with respect to the vehicle center line.

13. The straddled vehicle according to any of claims 9 to 12, further comprising a brake disc attached to the front wheel.

14. The straddled vehicle according to any of claims 1 to 13, further comprising a pair of bearings supporting the axle such that the axle is rotatable;
wherein as seen in a front view of the vehicle, one of the pair of bearings is located on one side with respect to the vehicle center line, and the other bearing is located on the other side with respect to the vehicle center line.

15. The straddled vehicle according to any of claims 1 to 14, further comprising:
a steering shaft (21); and
a correction mechanism (90) providing the steering shaft with an urging force (Fo) cancelling a moment (Mt1) around a steering axial line (sa), the moment acting on the steering shaft, wherein optionally
the correction mechanism is located on the opposite side to the motor with respect to the steering shaft.
